# EUROPEAN PATENT SPECIFICATION

(11) **EP 2 859 789 B1**
(45) Date of publication and mention of the grant of the patent: **22.05.2019**
(21) Application number: 14188549.1
(22) Date of filing: 10.10.2014
(51) Int. Cl.: A01G 33/00, E02B 3/04, A01G 9/02

(54) **Supporting structure and method of planting rhizomatous water plants**
Tragestruktur und Verfahren zur Pflanzung rhizomatischer Wasserpflanzen
Structure de support et procédé de plantation de plantes aquatiques rhizomateuses

(30) Priority: 10.10.2013 IT MI20131672
(43) Date of publication of application: 15.04.2015
(73) Proprietor: Saipem S.p.A., San Donato Milanese (IT)
(72) Inventor: Faidutti, Denis, 33050 Mortegliano (IT); Mottini, Mauro, 27020 Travaco' Siccomario (IT); Giovannini, Umberto, 20094 Corsico (IT)
(74) Representative: Eccetto, Mauro

(56) References cited:
- EP-A1- 2 050 331
- EP-A1- 2 548 435
- JP-A- H0 471 435
- JP-A- 2005 348 696

## Description

The present invention relates to a supporting structure for planting rhizomatous water plants. More specifically, the present invention relates to a supporting structure for planting cuttings of Posidonia Oceanica, which is a water plant endemic to the Mediterranean Sea, with the same characteristics as land plants, i.e. rhizomes, stems, leaves, flowers and fruit. It is found at depths of 3 to 47 metres, depending on water clarity, and forms vast underwater meadows which form an important part of the entire marine ecosystem. Posidonia Oceanica mainly grows in sandy salt water beds and, for its sensitivity to variations in environmental conditions, is considered a good biological marker of water quality.

In some marine areas, Posidonia Oceanica meadows are in decline. This has a serious effect on biodiversity and water quality, making it necessary to plant water plants, especially Posidonia Oceanica, to reconstruct marine ecosystems and, in some cases, to firm up surface layers of (sandy) water beds susceptible to erosion. Posidonia Oceanica rhizomes, in fact, form a dense network which greatly strengthens the surface layer of the water bed.

In addition to natural decline, another factor responsible for the temporary, partial destruction of water plant meadows is the construction of underwater installations involving work on the water bed, such as digging trenches to bury cables and/or pipelines along coastlines. Cables and pipelines along coastlines are necessarily buried to protect them from blunt objects, such as towed anchors, fishing nets, etc., and the digging and burying work obviously has a negative effect on any water plants along the trench route. For this reason, established plants along and close to the trench are best transferred to a suitable, safe place to reconstruct similar ecosystems in relatively contiguous areas. In other words, a new ecosystem must be created to compensate for temporarily impoverished sites through which underwater installations are run.

A number of methods and devices for bedding water plants are described in documents WO 2007/054991 A1, EP 736,494 A2 (natural-fibre mat), FR 2,239,120, FR 2,623,366, FR 2,695,536, and EP 621,377 B1 (wire netting cage with organic plant nutrients). None of these, however, are always wholly successful in terms of rooting cuttings.

At present, the most commonly used method of planting Posidonia Oceanica cuttings is the one described in Patent Application WO 2007/054991.

In this method, the work is done by hand by professional, legally certified underwater divers, who are given a training course on Posidonia Oceanica and on how to uproot and subsequently handle the plants, and are supervised by experts, normally marine biologists. The method described in Patent Application WO 2007/054991 is implemented using concrete frames of roughly 50x50 cm, of 40x40 cm on the inside, giving a working area of 1600 cm², and 6-8 cm thick. The frames are reinforced with zinc-plated wire netting with a polygonal mesh large enough to hold the cuttings, i.e. of roughly 1-1.5 cm. These bedding modules are placed on the sea bed and arranged as best to cover the area to be restored. All the devices described are laid by hand by underwater divers and are all highly labour-intensive.

To eliminate the above drawbacks, Patent Application EP 2,548,435 filed by the present Applicant describes supporting structures for bedding rhizomatous water plants in the bed of a body of water. The supporting structures described in the above Application all comprise a cage; and blocks of inert material, which are piled inside the cage and define irregular gaps in which the water plants are bedded and retained inside the cage. The results of these structures have been encouraging. A supporting structure for terrestrial plants is disclosed in EP 2,050,331.

The object of the present invention is to provide a supporting structure for planting rhizomatous water plants, which guarantees a higher rooting percentage than the known art, and which provides for delicately anchoring the rhizomatous water plants so as to retain them even in rough-sea conditions.

According to the present invention, there is provided a supporting structure for planting rhizomatous water plants in the bed of a body of water, the supporting structure comprising a cage; a mass of blocks of inert material housed inside the cage; and at least one pocket housed inside the cage to define a seat and an anchorage for rhizomatous water plants, wherein the pocket is movable between an open position, and a closed position in which it grips the rhizomatous water plants.

In the present invention, the pockets may be spaced and arranged as preferred inside the cage, and play an active part in retaining the rhizomatous water plants inside the cage. A given number of rhizomatous water plants may thus be gripped simultaneously inside the pocket.

Preferably, the cage comprises a top wall movable between an open position and a closed position.

This configuration allows easy access to the inside of the cage, both to insert the mass of inert material and the pockets, and to bed the rhizomatous water plant cuttings.

Preferably, the cage is parallelepiped-shaped.

This allows multiple supporting structures to be arranged side by side.

Preferably, the cage has a given mesh size smaller than the size of the pocket.

The cage serves to keep the mass of inert material and the pockets in a given orderly position.

Preferably, the pocket comprises semirigid netting folded into a "U" or "V" to form two substantially facing wings; said seat being bounded by said wings.

The deformability of the semirigid netting allows the pocket to be moved from an open to a closed position and, at the same time, prevents damage to the rhizomatous water plants.

Preferably, the supporting structure comprises fasteners for holding the wings of the pocket together in a closed position in which they grip at least one rhizomatous water plant.

The pocket is thus prevented from opening accidentally.

Preferably, the free edges of the wings are bent to form two respective, preferably coplanar, flanges.

The flanges allow the pockets to rest on the blocks of inert material.

Preferably, the cage comprises a substantially flat top wall; and the pocket and relative seat extend at the top wall, inside the cage, between the blocks of inert material, and form an angle other than a right angle, preferably a 30° to 60° angle, with the top wall.

This allows the rhizomatous water plants to be set at a preferential angle.

A further object of the present invention is to provide a method of planting rhizomatous water plants, designed to eliminate the drawbacks of the known art.

According to the present invention, there is provided a method of planting rhizomatous water plants in the bed of a body of water, the method comprising the steps of placing the rhizomatous water plants, suitably spaced apart, inside a seat of at least one pocket located inside a mass of blocks of inert material housed inside a cage; and anchoring the rhizomatous water plants to the pocket by gripping at least one rhizomatous water plant between two wings of the pocket.

The pocket defines a seat of predetermined size between the blocks of inert material and, at the same time, a safe, effective anchorage for the rhizomatous water plants. This way, a large number of rhizomatous water plants can be gripped simultaneously inside the pocket when it is closed.

Preferably, the method comprises securing the wings in a closed position by means of fasteners.

To be on the safe side, accidental opening of the pocket is preferably prevented.

A number of non-limiting embodiments of the present invention will be described by way of example with reference to the attached drawings, in which :
Figures 1 and 2 show side views, with parts removed for clarity, of a supporting structure in accordance with the present invention at respective operating stages;
Figure 3 shows a view in perspective, with parts removed for clarity, of a cage of the Figure 1 supporting structure;
Figure 4 shows a view in perspective, with parts removed for clarity, of a pocket of the Figure 1 supporting structure;
Figure 5 shows a larger-scale side view, with parts removed for clarity, of a detail in Figure 2;
Figure 6 shows a larger-scale side view, with parts removed for clarity, of a variation not part of the present invention.

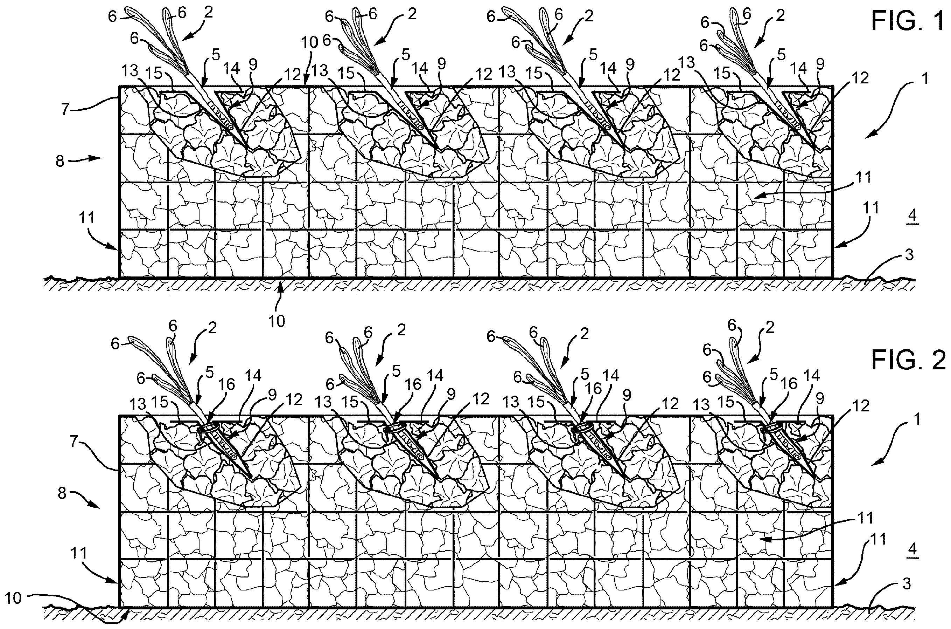

Number 1 in Figure 1 indicates as a whole a supporting structure for planting rhizomatous water plants 2 in the bed 3 of a body of water 4.

Rhizomatous water plants 2 are selected on the basis of their suitability for planting. More specifically, cuttings of rhizomatous water plants 2 are selected, each comprising a rhizome 5 preferably of about 1 cm in diameter and about 15 cm in length, and possibly with a few leaves 6 extending from one end of rhizome 5.

Supporting structure 1 comprises a substantially parallelepiped-shaped cage 7; a mass 8 of blocks of inert material of irregular shape and size; and a plurality of pockets 9. The blocks of inert material and pockets 9 are housed inside cage 7. Each pocket 9 defines a seat for housing one or preferably a plurality of aligned cuttings of rhizomatous water plants 2. The parallelepiped shape of cage 7 is also imparted to supporting structure 1.

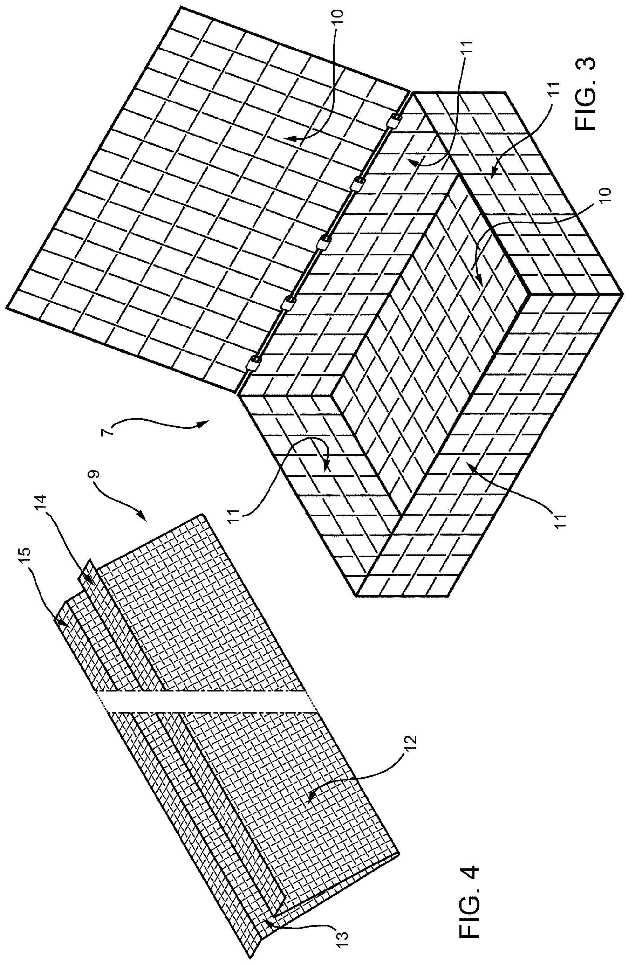

As shown in Figure 3, cage 7 has two, respectively top and bottom, walls 10, and four lateral walls 11. In use, bottom wall 10 rests on bed 3 of body of water 4, and top wall 10 can be opened, and is traversable for the purpose of bedding the cuttings of rhizomatous water plants 2. Top wall 10 is preferably hinged to a lateral wall 11 to form a sort of lid. Generally, cage 7 may be made in various sizes, depending on requirements. Cage 7 is made of semirigid netting, preferably with a 0.05 m x 0.15 m mesh size. The netting is preferably zinc-plated wire netting. Alternatively, the netting is made of plastic or biodegradable material.

With reference to Figures 1 and 2, the mass 8 of inert material preferably comprises preferably calcareous or carbonate rocks or rock fragments, or artificially conglomerated inert material. Materials with good resistance to corrosion and to cleavage by water action are preferred. Moreover, the blocks of inert material must not be altered or degraded, i.e. their surfaces must preferably be rounded as little as possible. Blocks of inert material of irregular, jagged shape are preferred.

The blocks of inert material are arranged randomly inside cage 7, so as to form gaps.

With reference to Figure 4, pocket 9 is made from a sheet of semirigid netting, which is folded into a U or a V to form two facing wings 12 and 13, which are further bent to form two substantially coplanar end flanges 14 and 15. In general, the mesh of the semirigid netting used for pocket 9 is much smaller than that of the wire netting used for cage 7 (Figure 3), and is preferably 0.01 m x 0.01 m. In other words, the sheet has a high degree of plastic deformability. The sheet is preferably made of zinc-plated wire netting. Alternatively, the sheet is made of plastic or biodegradable netting. Each pocket 9 is straight and defines a straight seat in which a given number of cuttings of rhizomatous water plants 2 (Figures 1 and 2) can be arranged in-line, depending on the length of the seat and the best spacing of rhizomatous water plants 2 (Figures 1 and 2).

With reference to Figures 1, 2 and 5, each pocket 9 is movable between an open position (Figure 1), and a closed position (Figure 2) in which it grips and retains rhizomes 5 of rhizomatous water plants 2. In the closed position, wings 12 and 13 are brought slightly together and secured in this position by fasteners 16, such as clamps.

Each pocket 9 extends between the blocks of inert material, and clearly indicates the respective seat for receiving at least one rhizomatous water plant 2 cutting.

Each pocket 9 is located at top wall 10, so the respective seat is easily accessible from top wall 10. The seat extends inside cage 7, between the blocks of inert material. Wings 12 and 13 bounding the seat slope with respect to top wall 10, so the seat also slopes at an angle, preferably ranging between 30° and 60°.

Flanges 14 and 15 rest on the blocks of inert material to prevent pockets 9 from sinking between the blocks.

The number of pockets 9 housable inside supporting structure 1 depends on the size of cage 7 and the best spacing of the rhizomatous water plant 2 cuttings.

The method of planting rhizomatous water plant 2 cuttings comprises inserting rhizomes 5, spaced as required, inside the seats of pockets 9. Next, the seats are closed partly by bringing wings 12 and 13 together to gently grip rhizomes 5 between wings 12 and 13. And the top ends of wings 12 and 13 are connected by fasteners 16, e.g. clamps, engaging the mesh of the semirigid netting.

Rhizomatous water plants 2 may be bedded above body of water 4, before supporting structure 1 is laid on bed 3 of body of water 4, or inside body of water 4, after supporting structure 1 is laid.

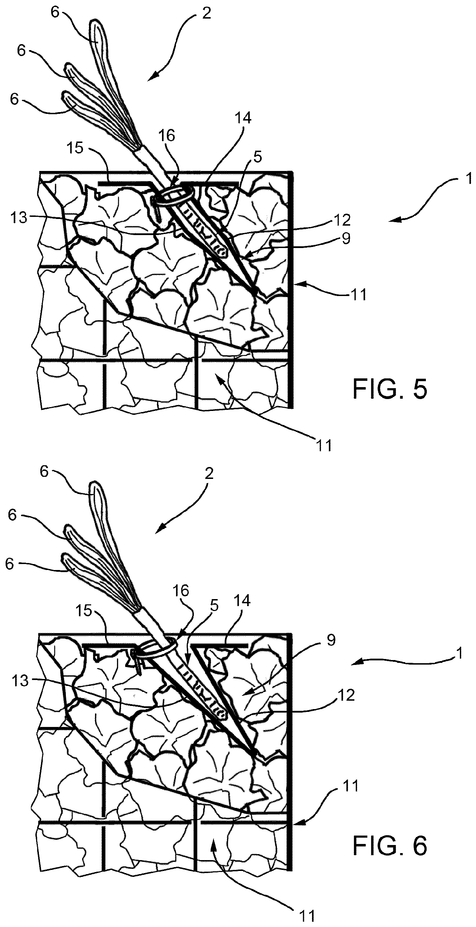

In the Figure 6 variation, not part of the present invention, each rhizomatous water plant 2 is anchored individually to pocket 9 by a respective fastener 16. Rhizome 5 is anchored by tying it to pocket 9 by fastener 16, which, in the example shown, is defined by a clamp.

Clearly, changes may be made to the embodiments described of the present invention without, however, departing from the protective scope of the accompanying Claims.

## Claims

1. A supporting structure for planting rhizomatous water plants in the bed of a body of water, the supporting structure (1) comprising a cage (7); a mass (8) of blocks of inert material housed inside the cage (7); and at least one pocket (9) housed inside the cage (7) to define a seat and an anchorage for rhizomatous water plants (2), wherein the pocket (9) is movable between an open position, and a closed position in which it grips the rhizomatous water plants (2).

2. A supporting structure as claimed in Claim 1, wherein the cage (7) comprises a top wall (10) movable between an open position and a closed position.

3. A supporting structure as claimed in Claim 1 or 2, wherein the cage (7) is parallelepiped-shaped.

4. A supporting structure as claimed in any one of the foregoing Claims, wherein the cage (7) is made of netting with a given mesh size smaller than the size of the pocket (9).

5. A supporting structure as claimed in any one of the foregoing Claims, wherein the pocket (9) comprises semirigid netting folded into a "U" or "V" to form two substantially facing wings (12, 13); said seat being bounded by said wings (12, 13).

6. A supporting structure as claimed in Claim 5, and comprising fasteners (16) for holding the wings (12, 13) of the pocket (9) together in a closed position in which they grip at least one rhizomatous water plant (2).

7. A supporting structure as claimed in Claim 5 or 6, wherein the free edges of the wings (12, 13) are bent to form two respective, preferably coplanar, flanges (14, 15).

8. A supporting structure as claimed in any one of the foregoing Claims, wherein the cage (7) comprises a substantially flat top wall (10); the pocket (9) and the relative seat extending at the top wall (10), inside the cage (7), between the blocks of inert material, and forming an angle other than a right angle, preferably a 30° to 60° angle, with the top wall (10).

9. A supporting structure as claimed in any one of the foregoing Claims, wherein the pocket (9) is made of semi-rigid netting with a much smaller mesh than the cage (7).

10. A method of planting rhizomatous water plants in the bed of a body of water, the method comprising the steps of placing the rhizomatous water plants (2), suitably spaced apart, inside a seat of at least one pocket (9) located inside a mass (8) of blocks of inert material housed inside a cage (7); anchoring the rhizomatous water plants (2) to the pocket (9) by gripping at least one rhizomatous water plant between two wings (12, 13) of the pocket (9).

11. A method as claimed in Claim 10, and comprising the step of securing the two wings (12, 13) of the pocket (9) in a closed position by means of fasteners (16).

## Patentansprüche

1. Tragestruktur zum Pflanzen rhizomatischer Wasserpflanzen am Grund eines Gewässers, wobei die Tragestruktur (1) einen Käfig (7); eine Masse (8) aus Blöcken inerten Materials, die im Käfig (7) untergebracht ist; und mindestens eine Tasche (9) umfasst, die innerhalb des Käfig (7) untergebracht ist, um einen Sitz und eine Verankerung für rhizomatische Wasserpflanzen (2) zu definieren, wobei die Tasche (9) zwischen einer geöffneten Position und einer geschlossenen Position, in der sie die rhizomatischen Wasserpflanzen (2) greift, beweglich ist.

2. Tragestruktur nach Anspruch 1, wobei der Käfig (7) eine obere Wand (10) umfasst, die zwischen einer geöffneten Position und einer geschlossenen Position beweglich ist.

3. Tragestruktur nach Anspruch 1 oder 2, wobei der Käfig (7) quaderförmig ist.

4. Tragestruktur nach einem der vorhergehenden Ansprüche, wobei der Käfig (7) aus einem Geflecht mit einer gegebenen Maschenweite besteht, die kleiner ist als die Größe der Tasche (9).

5. Tragestruktur nach einem der vorhergehenden Ansprüche, wobei die Tasche (9) ein halbstarres Geflecht umfasst, das zu einem "U" oder "V" gefaltet ist, um zwei einander im Wesentlichen zugewandte Flügel (12, 13) zu bilden, wobei der Sitz von den Flügeln (12, 13) begrenzt ist.

6. Tragestruktur nach Anspruch 5, die überdies Befestigungsmittel (16) umfasst, um die Flügel (12, 13) der Tasche (9) in einer geschlossenen Position zusammen zu halten, in der sie mindestens eine rhizomatische Wasserpflanze (2) greifen.

7. Tragestruktur nach Anspruch 5 oder 6, wobei die freien Kanten der Flügel (12, 13) gebogen sind, um jeweils zwei, vorzugsweise koplanare, Flansche (14, 15) zu bilden.

8. Tragestruktur nach einem der vorhergehenden Ansprüche, wobei der Käfig (7) eine im Wesentlichen flache obere Wand (10) umfasst; wobei sich die Tasche (9) und der damit zusammenhängende Sitz an der oberen Wand (10) innerhalb des Käfigs (7) zwischen den Blöcken inerten Materials erstrecken und einen anderen Winkel als einen rechten Winkel, vorzugsweise einen 30°- bis 60°-Winkel, mit der oberen Wand (10) bilden.

9. Tragestruktur nach einem der vorhergehenden Ansprüche, wobei die Tasche (9) aus halbstarrem Geflecht mit einer sehr viel kleineren Maschenweite als der Käfig (7) besteht.

10. Verfahren zum Pflanzen von rhizomatischen Wasserpflanzen am Grund eines Gewässers, wobei das Verfahren die Schritte des Platzierens der rhizomatischen Wasserpflanzen (2) in angemessenem Abstand zueinander in einem Sitz von mindestens einer Tasche (9) umfasst, die in einer Masse (8) von Blöcken inerten Materials positioniert ist, die in einem Käfig (7) untergebracht ist; des Verankerns der rhizomatischen Wasserpflanzen (2) an der Tasche (9), indem mindestens eine rhizomatische Wasserpflanze zwischen zwei Flügeln (12, 13) der Tasche (9) gegriffen wird.

11. Verfahren nach Anspruch 10, das überdies den Schritt des Sicherns der beiden Flügel (12, 13) der Tasche (9) in einer geschlossenen Position mittels Befestigungsmitteln (16) umfasst.

## Revendications

1. Structure de support pour planter des plantes aquatiques rhizomateuses dans le lit d'une masse d'eau, la structure de support (1) comprenant une cage (7) ; une masse (8) de blocs en un matériau inerte qui sont logés à l'intérieur de la cage (7) ; et au moins une poche (9) qui est logée à l'intérieur de la cage (7) de manière à ce qu'elle définisse une zone de réception et un ancrage pour des plantes aquatiques rhizomateuses (2), dans laquelle la poche (9) peut être déplacée entre une position ouverte et une position fermée dans laquelle elle a prise sur les plantes aquatiques rhizomateuses (2).

2. Structure de support selon la revendication 1, dans laquelle la cage (7) comprend une paroi de sommet (10) qui peut être déplacée entre une position ouverte et une position fermée.

3. Structure de support selon la revendication 1 ou 2, dans laquelle la cage (7) présente une forme de parallélépipède.

4. Structure de support selon l'une quelconque des revendications qui précèdent, dans laquelle la cage (7) est constituée par un treillis faisant fonction de filet qui présente une taille de maille donnée qui est inférieure à la taille de la poche (9).

5. Structure de support selon l'une quelconque des revendications qui précèdent, dans laquelle la poche (9) comprend un treillis faisant fonction de filet semi-rigide qui est replié selon un "U" ou un "V" de manière à ce qu'il forme deux ailes se faisant sensiblement face (12, 13) ; ladite zone de réception étant délimitée par lesdites ailes (12, 13).

6. Structure de support selon la revendication 5, et comprenant des moyens de fixation (16) pour maintenir les ailes (12, 13) de la poche (9) ensemble dans une position fermée dans laquelle elles ont prise sur au moins une plante aquatique rhizomateuse (2).

7. Structure de support selon la revendication 5 ou 6, dans laquelle les bords libres des ailes (12, 13) sont fléchis de manière à ce qu'ils forment deux flancs respectifs, de préférence coplanaires (14, 15).

8. Structure de support selon l'une quelconque des revendications qui précèdent, dans laquelle la cage (7) comprend une paroi de sommet sensiblement plane (10) ; la poche (9) et la zone de réception relative s'étendant au niveau de la paroi de sommet (10), à l'intérieur de la cage (7), entre les blocs en un matériau inerte, et formant un angle autre qu'un angle droit, de préférence un angle de 30° à 60°, avec la paroi de sommet (10).

9. Structure de support selon l'une quelconque des revendications qui précèdent, dans laquelle la poche (9) est constituée par un treillis faisant fonction de filet semi-rigide qui présente une maille beaucoup plus petite que la cage (7).

10. Procédé pour planter des plantes aquatiques rhizomateuses dans le lit d'une masse d'eau, le procédé comprenant les étapes consistant à positionner les plantes aquatiques rhizomateuses (2), espacées les unes des autres de manière appropriée, à l'intérieur d'une zone de réception d'au moins une poche (9) qui est localisée à l'intérieur d'une masse (8) de blocs en un matériau inerte qui sont logés à l'intérieur d'une cage (7) ; et à ancrer les plantes aquatiques rhizomateuses (2) sur la poche (9) par mise en prise d'au moins une plante aquatique rhizomateuse entre deux ailes (12, 13) de la poche (9).

11. Procédé selon la revendication 10, et comprenant l'étape consistant à fixer fermement les deux ailes (12, 13) de la poche (9) selon une position fermée au moyen de moyens de fixation (16).
